# EUROPÄISCHE PATENTSCHRIFT

(11) **EP 0 340 417 B1**
(45) Veröffentlichungstag und Bekanntmachung des Hinweises auf die Patenterteilung: **15.02.1995**
(21) Anmeldenummer: 89104059.4
(22) Anmeldetag: 08.03.1989
(51) Int. Cl.: A43D 119/00, B23Q 15/00, B29C 45/00

(54) **Verfahren und Vorrichtung zum Anformen von gegebenenfalls mehrschichtigen Sohlen an Schuhschäfte**
Method and device for moulding multi-layer soles onto shoe uppers
Procédé et appareil pour mouler des semelles en plusieurs couches sur une tige de chaussure

(30) Priorität: 04.05.1988 DE 3815013
(43) Veröffentlichungstag der Anmeldung: 08.11.1989
(73) Patentinhaber: Klöckner Desma GmbH, 47057 Duisburg (DE)
(72) Erfinder: Gierschewski, Fritz, Dipl.-Ing., D-2800 Bremen (DE); Lühr, Joachim, Dipl.-Ing., D-2811 Schwarme (DE); Köster, Claus Dieter, Dipl.-Ing., D-2800 Bremen (DE)
(74) Vertreter: Röther, Peter, Dipl.-Phys.

(56) Entgegenhaltungen:
- EP-A- 0 042 671
- EP-A- 0 195 289
- EP-A- 0 213 909
- US-A- 3 854 227
- SOVIET INVENTIONS ILLUSTRATED Section P/Q Woche 84/15, 23 Mai 1984, Derwent Publishing Ltd London GB *Klasse P22, Nr. 84-092814/15* & SU-A-992003 (FILM MATL SYNTHLEA) 05-02-83

## Beschreibung

Die Erfindung betrifft ein Verfahren zum Anformen von gegebenenfalls mehrschichtigen Sohlen nach dem Oberbegriff des Anspruchs 1.

Die Erfindung betrifft ferner eine Vorrichtung zur Durchführung dieses Verfahrens nach dem Oberbegriff des Anspruchs 3.

Nach dem Stand der Technik ist es bekannt, daß die durch das Anspritzen und das gleichzeitige Verkleben (Anpressen) der sich formenden und verfestigenden Schuhsohle mit dem Schaft geschaffene Verbindung verbessert werden kann, wenn im Bereich der Ansohlung das Schaftleder an der Oberfläche aufgerauht und gegebenenfalls mit einem Klebstoff versehen ist. Dabei sind mangelhafte Sohlenbefestigungen nur zu einem geringen Teil auf die verwendeten Sohlenklebstoffe wie Polychloropren- oder Polyurethanklebstoffe zurückzuführen, sondern vielmehr auf ungenügend sorgfältiges Verarbeiten. Als Aufrauhwerkzeuge werden z.B. Drahtbürsten, Aufrauhscheiben und Aufrauhwalzen mit in einer Haltemasse wie z.B. Gummi eingebetteten Stahldrähten, Schleifsteine und Schleifbänder verwendet. Das maschinelle wie das manuelle Aufrauhen erfordern eine exakte Werkzeugführung, um Beschädigungen des Schaftobermaterials zu vermeiden. Wesentlich für den Aufrauhvorgang ist auch der Anpressdruck des Werkzeuges. Das Aufrauhen ist stets so durchzuführen, daß die Oberfläche von Fremdstoffen gereinigt, die schwachen Oberflächenschichten entfernt und die darunter befindliche festere und saubere Materialschicht freigelegt wird, mit der die Sohle, gegebenenfalls unter Zwischenlage einer Klebstoffschicht, eine haltbare Verbindung herstellen kann. Es ist auch schon vorgeschlagen worden, Aufrauhbürsten unter Zuhilfenahme einer dem verwendeten Leisten entsprechenden Schablone zu führen, ohne das Aufrauhen automatisieren zu können. Nachteiligerweise erfordert dies für jeden Leisten eine gesonderte Schablone, also einen erheblichen Materialaufwand. Zudem kann bei einer solchen Führung des Aufrauhwerkzeuges eine eventuelle Unebenheit des Schaftmaterials bzw. des Leistens nicht berücksichtigt werden.

Aus der EP-A- 0 042 671 ist ein Verfahren zum automatischen Aufrauhen bekannt, bei dem ein auf Leisten aufgezogener Schaft im Bereich des auf die Laufseite des Leistens umgebogenen Schaftrandes gerauht wird, wobei die Bearbeitungswerkzeuge nach vorher eingegebenen Raum-Koordinaten die Sohlenebene abfahren. Eine wirkliche Rundum-Aufrauhung auch im seitlichen Schaftbereich ist nicht möglich. Gleichfalls ist es mit der dem Verfahren zugrundeliegenden Vorrichtung nicht möglich, die Koordinaten der Sollkurve den tatsächlichen Gegebenheiten anzupassen, um Unregelmäßigkeiten bei einzelnen Leisten bzw. Positionierungsfehler derselben auszugleichen. Darüber hinaus bildet die dem bekannten Verfahren zugrundeliegende Vorrichtung eine selbständige Bearbeitungsstation, aus der der bearbeitete Gegenstand entnommen werden muß, um dann eventuell in eine Drehtischanlage zum Spritzgießen eingebaut zu werden.

Beim Verkleben kommt es wesentlich darauf an, daß die Kleberschicht auf dem Leistenobermaterial genau positioniert ist und eine möglichst gleichmäßige Dicke von 20 bis 30 micron hat. Ist die Kleberschicht dicker, drohen Kleberrisse aufzutreten, die ein Ablösen der verklebten Schichten zur Folge haben können, eine zu dünne Kleberschicht kann hingegen keine durchgehende sichere haltbare Klebeverbindung schaffen. Aus den bereits beim Aufrauhen genannten Gründen ist somit eine Automatisierung eines Klebeauftrages schwierig.

Es ist aus der EP-A- 0 213 909 ein Verfahren zum automatischen Klebeauftrag auf die Schaftränder bekannt. Dort werden zwar die Auftragswerkzeuge entsprechend einer eventuellen seitlichen Abweichung der Sohlenlängsachse nachgeführt, ein gleichmäßiger Klebeauftrag ist gleichwohl nicht möglich, da vertikale Abweichungen nicht berücksichtigt werden können.

Zudem ist diese Bearbeitungsstation ebenfalls nicht in einer Spritzgießanlage integriert, so daß auch hierbei jeder mit Klebstoff versehene Schaft aus der Vorrichtung entnommen und in die Spritzgießanlage eingesetzt werden muß.

Schließlich treten beim Anspritzen von Polyurethan Probleme wegen der niedrigen Viskosität auf. Um eine zufriedenstellende Abdichtung der Formwerkzeuge zu gewährleisten, wird daher das Polyurethan zunächst in einen größeren Formenraum eingespritzt als das Volumen der zu spritzenden Sohle groß ist, wobei das Polyurethan aufgeschäumt wird. Erst hieran anschließend wird es zur Sohle verdichtet. Dementsprechende Ausbildungen von Spritzgießformen, die einen gezielten Austrieb des Materials weitgehend verhindern, sind in der DE-PS 20 22 118 und der DE-AS 20 48 596 beschrieben. Allerdings kann nicht vollständig verhindert werden, daß sich am Sohlenrand Grate bilden, die nach Aushärtung des Sohlenmaterials entfernt werden müssen. Dies gilt auch für Schuhe mit mehrschichtigen Sohlen, die einschließlich ihres Herstellverfahrens und der dazu notwendigen Vorrichtung in der DE-PS 22 41 493 beschrieben werden. Hierbei wird in einem ersten Arbeitstakt die Laufsohle in einen durch die Seitenformteile, den Bodenstempel und den Gegenstempel gebildeten Formraum gespritzt, wobei der Formraum erst nach Aufschäumen des Polyurethan auf die Zwischensohlengröße verkleinert wird. Anschließend wird der Gegenstempel durch den Leisten mit einem aufgeleisteten Schaft ersetzt und in entsprechender Weise die Zwischensohle gespritzt bzw. durch Verkleinerung des sich bildenden Formenraums gepreßt.

Die Entfernung eines beim Spritzgießen entstehenden Grates ist naturgemäß in keiner der beiden zuerst diskutierten Druckschriften vorgesehen. Dies müßte in einer weiteren Station geschehen, wobei die aus der Bearbeitungsstation in die Spritzgießanlage eingesetzten Schäfte selbstverständlich wieder mit entsprechenden Toleranzen angeordnet sind, wodurch kein sauberes Beschneiden gewährleistet ist.

Es ist daher Aufgabe der Erfindung, ein Verfahren und eine Vorrichtung anzugeben, womit in einer automatisierten Fertigung das Aufrauhen der Schaftoberfläche im Ansohlbereich, der dortige Klebstoffauftrag und/oder das abschließende Entgraten unter Vermeidung der vorstehend erwähnten Nachteile ohne großen konstruktiven und apparativen Aufwand durchführbar sind. Insbesondere sollen hierbei individuelle Leisten-,Formen- und/oder Schaftmaterial - als auch Dichtkantenfehler berücksichtigt werden.

Diese Aufgabe wird durch die im Anspruch 1 gegebenen Verfahrensmerkmale gelöst. Vorteilhafterweise werden hierdurch Fertigungsungenauigkeiten an den Formen, den Leisten sowie Positionierfehler derselben und Lageveränderungen berücksichtigt, so daß die verwendeten Bearbeitungswerkzeuge das Schaftmaterial bzw. die angespritzte Sohle nicht verletzen können. Durch erhöhte Fertigungsgenauigkeit wird der hergestellte Schuh qualitativ verbessert.

Hierbei werden die durch das Aufrauhen und/Entgraten abgetragenen Späne unmittelbar abgesaugt. Dies hat den Vorteil, daß sie nicht nachfolgend zur Verarbeitung gelangende Materialien verschmutzen können, was insbesondere ein sauberes Verkleben verhindern könnte.

Bei Verwendung eines Drehtisches mit mehreren Formenstationen werden nacheinander die auf einzelnen Leisten geführten Schäfte in den Arbeitsbereich eines feststehenden rechnergesteuerten Roboterbearbeitungswerkzeuges geführt, dessen das Werkzeug tragender Arm jeweils um den Schaft im Bereich der Anformung geführt wird. Will man das Aufrauhen, das Auftragen des Klebstoffes und auch das Entgraten durchführen, sollten in den entsprechenden Positionen drei solcher Roboterwerkzeuge vorgesehen sein. Prinzipiell ist es jedoch auch möglich, mit nur einem Roboter zu arbeiten, dessen Werkzeuge jeweils für den nächsten Bearbeitungsvorgang austauschbar sind. Hierbei wird die erfindungsgemäße Kenntnis ausgenutzt, daß das Aufrauhen, das Klebstoffauftragen und das Entgraten hinsichtlich der Werkzeugführung einander entsprechende Arbeitsvorgänge sind, bei deren Ablauf jeweils die gleichen Ortskoordinaten Triple und dazugehörigen Krümmungswerte zugrundegelegt werden können. Die Werkzeuge werden auf entsprechenden parallelen Bahnen im Raum geführt.

Liegen die geometrischen Daten einer Kombination von Leisten und den übrigen Formenteilen exakt fest, ist es ohne weiteres möglich, für ein und denselben Leistentyp durch Multiplikation mit fest vorgegebenen Werten ( Gradierregeln ) die entsprechenden Maße der anderen im wesentlichen formgleichen aber größenunterschiedlichen Leisten zu bestimmen, um somit eine neue Soll-Linie, bestehend aus Ortskoordinaten und jeweiliger Krümmung, zu ermitteln. Es genügt im Prinzp demnach, einen Leisten bzw. ein Formenpaar einmal zu vermessen, um danach eine komplette Serie von Schuhen unterschiedlicher Größe fertigen zu können.

Die Aufgabe wird ferner durch eine Vorrichtung mit den im Anspruch 3 gekennzeichneten Merkmalen gelöst. Die Vorrichtung kommt mit wenigen Bauelementen aus.

Die Meßapparatur dient der Vermessung eines Leistens bzw. der dazugehörenden Formen einer Serie. Ist ein solcher Leisten einmal vermessen, kann er durch Abtasten weniger Punkte nicht nur hinsichtlich seines Typs und seiner Größe identifiziert werden, sondern auch hinsichtlich seiner momentanen Lage, die er gegebenenfalls am Drehtisch einnimmt. Hierzu ist es erforderlich, daß neben der Meßapparatur mit berührend oder berührungslos arbeitenden Meßtastern ein Meßdatenspeicher vorgesehen ist. Dieser Speicher enthält jeweils die Ortskoordinaten und die dazugehörigen Krümmungswinkel der abzufahrenden Schaft- bzw. Sohlengeometrie, die in Beziehung zu einem jeweiligen Koordinatennullpunkt zu setzen sind. Liegen dem rechnergesteuerten Roboter die genannten Werte vor, kann er das an einem Arm angelenkte Werkzeug so führen, daß es tangential zur Schaftkrümmung über den Bereich der Ansohlung bewegt wird. Hierbei ist, wie bereits oben angesprochen, das Werkzeug auswechselbar, so daß ein und derselbe Roboter gegebenenfalls das Aufrauhen, Klebstoffauftragen und/oder das Entgraten durchführen kann. Zweckmäßige Werkzeuge sind ein Fräser, eine Klebpistole und/oder ein erwärmbares Messer.

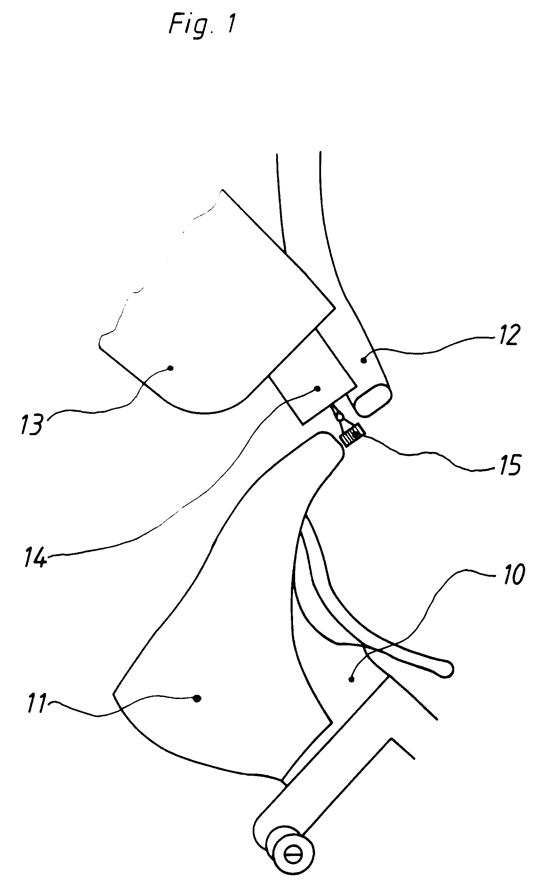

Ein Ausführungsbeispiel der Erfindung ist in der Zeichnung dargestellt, die einen Leisten mit aufgespannten Schuhschaft während des Aufrauhens zeigt.

Die zum Spritzgießen verwendete Vorrichtung ist ausführlich in der DE-PS 22 41 493 beschrieben, auf die hiermit Bezug genommen wird. Selbstverständlich können auch zum sogenannten Direktansohlen geeignete Vorrichtungen im Zusammenhang mit der Erfindung verwendet werden.

Der auf einen Leisten 10 aufgezogene Schaft 11 wird im Bereich der Sohlenanformung mittels eines Fräsers 15 aufgerauht, der an einem Arm 14 des rechnergestützten Roboters 13 befestigt ist. Der Arm 14 bzw. Fräser 15 ist so angelenkt, daß der Fräser 15 ringsum in dem Bereich der späteren Sohlenanformung bei allen aufspannbaren Leisten 10 führbar ist. Die beim Fräsen abfallenden Späne werden mittels einer Saugvorrichtung, von der hier nur ein Ansaugschlauch 12 dargestellt ist, abgeführt, Das erfindungsgemäße Verfahren arbeitet dergestalt, daß die von einer Meßapparatur ermittelten Daten der Formendichtkante, welche die aufeinanderzuschwenkbaren Formenhälften gegenüber dem Schaft bzw. dem Leisten abdichtet, samt ihrer Krümmungen erfaßt und zusammen mit den in diesem Bereich vorliegenden Leistenwerten gespeichert werden. Der betreffende Speicher besitzt darüber hinaus sogenannte Gradierregeln, das sind Multiplikatoren, mit denen die Maße eines Leistens einer bestimmten Größe multipliziert werden müssen, um die entsprechenden Maße eines Leisten des selben Typs davon abweichender Größe zu erhalten. Der Speicher ist mit einem Rechner gekoppelt, der zur Entgegennahme jeweiliger Steuerbefehle für den Roboter 13 ausgestattet ist.

Kommt eine Formenstation in den Roboterarbeitsbereich, so wird mittels der genannten Meßtaster oder Meßapparatur festgestellt, welche relative Lage bzw. Raumwinkelneigung der vorliegende Leisten aufweist. Gegebenenfalls dient hierzu ein nicht dargestellter Zentrierzapfen, über den eine Koordinatennullpunktseichung durchführbar ist. Liegt der Koordinatennullpunkt fest, kann anhand der gespeicherten Werte die Sollkurve, die das Bearbeitungswerkzeug 15 abzufahren hat, gegebenenfalls unter Berücksichtigung der kleineren oder größeren Größe des Leistens 10 ermittelt bzw. errechnet werden. Betreffende Steuerbefehle werden unmittelbar an den Roboter 13 bzw. den Arm 14 gegeben. Auf diese Weise kann das Aufrauhen, etwaige Klebstoffauftragen sowie das abschließende Entgraten mit einer bisher nach dem Stand der Technik nicht zu verwirklichenden Genauigkeit durchgeführt werden.

## Patentansprüche

1. Verfahren zum Anformen von gegebenenfalls mehrschichtigen Sohlen an in einer Drehtischanlage mit mindestens einer Formstation auf Leisten ( 10 ) aufgespannte Schuhschäfte ( 11 ), wobei die Sohle aus Werkstoffen niedriger Viskosität , insbesondere Polyurethan, Thermoplast oder Gummi, nach Aufrauhung des Anformbereiches des Schuhschaftes und/oder dortigem Klebstoffauftrag mit dem Schuhschaft verbunden wird, wozu in der Formstation der Werkstoff zur Bildung der Sohlenschicht(en) gegebenenfalls aufeinanderfolgend in einer Form mit Seitenformteilen, deren Dichtkanten einen bestimmten Bereich bestimmen, auf diese aufsetzbaren Leisten und einem verschiebbaren Bodenstempel eingespritzt wird, deren Formhohlraum bei Aufnahme des Werkstoffes größer ist als das Volumen der jeweiligen Sohlenschicht und der nach Beendigung des oder eines Einspritzvorganges durch Verschieben des Bodenstempels auf das der Sohlenschicht entsprechende Volumen unter Formung der Sohlenschicht verkleinert wird, und wobei abschließend der Sohlenrand vom Spritzgrat befreit wird,
dadurch gekennzeichnet,
daß vor dem Einspritzvorgang die Geometrie des Leistens und die Geometrie der Seitenformteile im Bereich ihrer Dichtkanten einer für die jeweils zu produzierende Serie repräsentativen Formstation des Drehtisches durch Festlegung von Raumkoordinaten ( x, y, z ) und des jeweiligen Tangentialwinkels ( u ) vermessen wird und eine Soll-Linie zu einem definierten Koordinaten- Nullpunkt in einer vorzugsweise außerhalb des Drehtisches angeordneten Meß- und Rechnereinheit bestimmt und gespeichert werden, daß anschließend unmittelbar vor dem Einspritzvorgang bei jeder Formstation sukzessive durch Abtastung weniger Leisten- und Dichtkantenpunkte der Koordinaten-Nullpunkt ermittelt bzw. festgelegt wird, die Abweichung des vor dem Einspritzvorgang ermittelten und in der Meß- und Rechnereinheit gespeicherten Koordinaten-Nullpunktes zum durch Abtastung ermittelten Koordinaten-Nullpunkt in der Formstation bestimmt wird, ein diesem entsprechender Koordinatensatz errechnet und eine angepaßte Soll-Linie festgelegt wird, entlang der ein oder mehrere an einem von der Meß-Rechnereinheit gesteuerten Roboterarm ( 14 ) angeordnete(e) Bearbeitungswerkzeug(e) ( 15 ) zum Aufrauhen, Klebstoffauftrag und/oder- nach dem Einspritzvorgang- zum Beschneiden geführt wird ( werden ) wobei die beim Aufrauhen und/oder Beschneiden anfallenden Abfallstoffe unmittelbar abgesaugt werden.

2. Verfahren nach Anspruch 1,
dadurch gekennzeichnet,
daß die bei einer Form gemessenen Werte durch Multiplikation mit fest vorgegebenen Werten auf die Maße der anderen im wesentlichen formgleichen aber größenunterschiedlichen Leisten und Seitenformteilen zur Berechnung einer angepaßten Soll-Linie ermittelt werden.

3. Vorrichtung zur Durchführung des Verfahrens nach Anspruch 1 und 2, mit einem Leisten ( 10 ) zur Aufnahme des Schaftes ( 11 ), einem verschiebbaren Bodenstempel, auseinanderbewegbaren, den Bodenstempel und den Leisten ( 10 ) umschließenden Seitenformteilen sowie gegebenenfalls mit einem anstelle des Leistens ( 10 ) in die Form einsetzbaren Gegenstempel, der seitlich mit einer ringsumlaufenden Dichtung aus elastischem Material versehen ist, auf einem Drehtisch oder Zuführsystem ,
gekennzeichnet durch
eine mit Meßtastern und/oder berührungslos arbeitenden optischen Sensoren ausgestattete Meßapparatur zur Vermessung der Geometrie des Leistens und der Dichtkante der Seitenformteile sowie zur Ermittlung eines bei dem Leisten-oder Formentyp festgelegten Koordinatennullpunktes am Formenrahmen, wobei die Meßapparatur mit einem Speicher für die Meßwerte und dieser Speicher mit einem rechnergesteuerten Roboterbearbeitungswerkzeug ( 15 ) verbunden sind, dessen das Werkzeug ( 15 ) tragender Arm ( 13, 14 ) so angelenkt ist, daß das Werkzeug ( 15 ) ringsum tangential zur Schaftkrümmung über den Bereich der Ansohlung führbar ist.

4. Vorrichtung nach Anspruch 3,
dadurch gekennzeichnet,
daß das Werkzeug lösbar befestigt und damit auswechselbar ist.

5. Vorrichtung nach Anspruch 3 oder 4,
dadurch gekennzeichnet,
daß das Werkzeug ein Fräser, eine Klebepistole oder ein erwärmbares Messer ist.

## Claims

1. Method of moulding possibly multi-layer soles onto shoe uppers (11) which are clamped onto lasts (10) in a rotary table system having at least one moulding station, the sole, made of low-viscosity materials, in particular polyurethane, thermoplastic material or rubber, after roughening of the moulding-on region of the shoe upper and/or the application thereof adhesive being connected to the shoe upper, for which purpose the material for forming the sole layer(s), if appropriate one after the other, is injected in the moulding station in a mould having side mould parts whereof the sealing edges define a defined region, onto these attachable lasts and a displaceable bottom die, the mould cavity of this mould being larger on receiving the material than the volume of the respective sole layer and being reduced once the or one injection procedure has ended by displacing the bottom die to the volume corresponding to the sole layer, thus shaping the sole layer, and finally the sole edge being freed of injection flash, characterized in that before the injection procedure the geometry of the last and the geometry of the side mould parts in the region of their sealing edges of a moulding station of the rotary table which is representative of the run in each case to be produced are measured by establishing spatial coordinates (x, y, z) and the respective tangential angle (u), and a set line to a defined coordinate zero point is determined and stored in a measuring and computer unit preferably arranged outside the rotary table, in that then, directly before the injection procedure, the coordinate zero point is determined and fixed at each moulding station successively by scanning a few last and sealing edge points, the deviation of the coordinate zero point determined before the injection procedure and stored in the measuring and computer unit is determined for the coordinate zero point determined by scanning in the moulding station, a set of coordinates corresponding thereto is calculated and an adapted set line is established, along which one or more machining tool(s) (15) arranged on a robot arm (14) controlled by the measuring/computer unit is(are) guided for roughening, adhesive application and/or - after the injection procedure - for trimming, the waste materials which occur during roughening and/or trimming being removed directly by suction.

2. Method according to Claim 1, characterized in that the values measured in the case of one mould are, by multiplication with fixedly pre-determined values, determined to give the measurements of the other lasts and side mould parts which are substantially the same shape but different in size, for the calculation of an adapted set line.

3. Device for carrying out the method according to Claims 1 and 2, having a last (10) for receiving the upper (11), a displaceable bottom die, side mould parts which can be moved apart and enclose the bottom die and the last (10), and if appropriate having instead of the last (10) a counter-die which can be inserted into the mould and which is provided laterally with a peripheral seal of resilient material, on a rotary table or feed system, characterized by a measuring apparatus, equipped with measuring probes and/or contact-free optical sensors, for measuring the geometry of the last and the sealing edge of the side mould parts, and for determining a coordinate zero point, fixed for the last or mould type, on the moulding frame, the measuring apparatus being connected to a store for the measured values and this store being connected to a computer-controlled robot machining tool (15) whereof the arm (13, 14) carrying the tool (15) is articulated in such a way that the tool (15) can be guided peripherally and tangentially with respect to the curvature of the upper over the region of moulding on.

4. Device according to Claim 3, characterized in that the tool is detachably secured and is thus exchangeable.

5. Device according to Claim 3 or 4, characterized in that the tool is a milling tool, an adhesive gun or a heatable blade.

## Revendications

1. Procédé pour surmouler des semelles, éventuellement en plusieurs couches, sur des tiges de chaussures (11) fixées sur des formes (10) dans une installation à table tournante comprenant au moins une station de moulage, la semelle constituée de matériaux de faible viscosité, en particulier de polyuréthanne, de matière thermoplastique ou de caoutchouc, étant réunie à la tige de chaussure, après grattage de la zone de surmoulage de la tige de chaussure et/ou application de colle dans cette zone, dans lequel le matériau pour la formation de la (des) couche(s) de semelle est injecté, éventuellement successivement, au poste de moulage, dans un moule comportant des éléments de moule latéraux dont les bords d'étanchéité déterminent une zone définie, des formes pouvant être déposées sur celui-ci, et un moule mâle mobile, dont la cavité lors de la réception du matériau est plus grande que le volume de la couche de semelle respectivement considérée, et réduite, après l'achèvement du ou d'un cycle d'injection, par le déplacement du moule mâle, au volume correspondant à la couche de semelle, avec formation de ladite couche de semelle et ébavurage terminal du bord de la semelle, caractérisé en ce qu'avant l'injection, la géométrie de la forme et la géométrie des éléments de moule latéraux, dans la région de leurs bords d'étanchéité d'un poste de moulage de la table tournante représentative pour la série à produire, sont définies par la détermination des coordonnées spatiales (x, y, z) et de l'angle tangentiel (u) respectif, qu'une ligne théorique pour une origine des coordonnées définie est déterminée et mémorisée dans une unité de mesure et de calcul disposée de préférence à l'extérieur de la table tournante, qu'ensuite l'origine des coordonnées est déterminée ou définie, pour chaque poste de moulage, immédiatement avant l'injection, par balayage successif d'un petit nombre de points de forme et de bords d'étanchéité, que l'écart entre l'origine des coordonnées déterminée avant l'injection et mémorisée dans l'unité de mesure et de calcul et l'origine des coordonnées déterminée par balayage est déterminé dans le poste de moulage, qu'un jeu de coordonnées correspondant à ce dernier est calculé, et qu'une ligne théorique adaptée est définie le long de laquelle est (sont) guidé(s) un ou plusieurs outil(s) d'usinage (15) monté(s) sur un bras de robot (14) commandé par l'unité de mesure et de calcul et destiné(s) au grattage, à l'application de colle et/ou - après l'injection - au rognage, les déchets produits lors du grattage et/ou du rognage étant évacués directement par aspiration.

2. Procédé selon la revendication 1, caractérisé en ce que les valeurs mesurées pour un moule sont adaptées, par multiplication avec des valeurs fixes, aux cotes des autres formes et éléments de moule latéraux présentant sensiblement la même forme mais des dimensions différentes, pour déterminer une ligne théorique adaptée.

3. Dispositif pour la mise en oeuvre du procédé selon les revendications 1 et 2, comprenant sur une table tournante ou un système d'amenée, une forme (10) pour la réception de la tige (11), un moule mâle mobile, des éléments de moule latéraux écartables et entourant le moule mâle et la forme (10) ainsi que, le cas échéant, un moule mâle conjugué qui peut être inséré dans le moule à la place de la forme (10) et est muni latéralement d'un joint d'étanchéité continu en matière élastique, caractérisé en ce qu'il comporte un système de mesure équipé de palpeurs de mesure et/ou de détecteurs optiques fonctionnant sans contact, pour la mesure de la géométrie de la forme et du bord d'étanchéité des éléments de moule latéraux ainsi que pour la détermination d'une origine des coordonnées sur le cadre du moule définie pour le type de forme ou de moule considéré, le système de mesure étant relié à une mémoire pour les valeurs mesurées et ladite mémoire étant reliée à un outil d'usinage (15) d'un robot commandé par ordinateur dont le bras (13, 14) portant l'outil (15) est articulé de telle façon que l'outil (15) peut être guidé tout autour, tangentiellement par rapport à la courbure, sur la région de semellage.

4. Dispositif selon la revendication 3, caractérisé en ce que l'outil est monté de manière amovible et donc interchangeable.

5. Dispositif selon l'une des revendications 3 ou 4, caractérisé en ce que l'outil est une fraise, un pistolet à colle ou une lame chauffante.
